# EUROPEAN PATENT SPECIFICATION

(11) **EP 1 530 331 B1**
(45) Date of publication and mention of the grant of the patent: **12.12.2007**
(21) Application number: 04025813.9
(22) Date of filing: 29.10.2004
(51) Int. Cl.: H04L 12/58, H04L 29/06, H04N 1/00, H04L 12/26

(54) **Apparatus and method for data transmission verification**
Vorrichtung und Verfahren zur Prüfung von Datenübertragung
Appareil et méthode de vérification de la transmission de données

(30) Priority: 06.11.2003 JP 2003376668
(43) Date of publication of application: 11.05.2005
(73) Proprietor: Matsushita Electric Industrial Co., Ltd., Kadoma-shi Osaka (JP)
(72) Inventor: Kimura, Shogo, Kawasaki-shi Kanagawa 211-0005 (JP); Umebayashi, Akito, Yokohama-shi Kanagawa 241-0816 (JP)
(74) Representative: Soames, Candida Jane

(56) References cited:
- EP-A- 0 886 206
- US-A1- 2002 120 699
- US-B1- 6 639 689
- PATENT ABSTRACTS OF JAPAN vol. 2002, no. 05, 3 May 2002 (2002-05-03) & JP 2002 007095 A (CANON INC), 11 January 2002 (2002-01-11) & JP 2002 007095 A (CANON INC) 11 January 2002 (2002-01-11)

## Description

### BACKGROUND OF THE INVENTION

### 1. Field of the Invention

The present invention relates to a server apparatus and a relay apparatus that provides information regarding a job to manage a plurality of communication apparatuses, and to a method of verifying status of communications between a plurality of communication apparatuses.

### 2. Description of Related Art

Regarding a communication apparatus which transmits and receives data, such as a facsimile apparatus or other like apparatus, it is required to verify that data transmitted from a transmitting apparatus is delivered to a receiving apparatus. Therefore, to manage the above communication apparatus, it is necessary to verify delivery status indicating whether or not the data is delivered to the receiving apparatus. It is also necessary to analyze a cause of a failed delivery when the data failed to be delivered to the receiving apparatus.

To verify the delivery status or to analyze the cause of the failed delivery, it is required to obtain information regarding a job which is performed at the communication apparatus when the communication apparatus transmits and receives the data. It is known that, in order to conveniently obtain the information regarding the job, a facsimile apparatus generates a Web page data in which the information regarding the job is described, the job being performed at the facsimile apparatus, and the information regarding the job can be referred at a Web browser of a personal computer which is connected to the facsimile apparatus via a LAN (see Reference Document 1).

### Reference Document 1

Japanese Kokai (laid open) patent publication 2002-7095

However, it is necessary to compare a job performed at a transmitting apparatus with a job performed at a receiving apparatus, in order to verify the delivery status or to analyze the cause of the failed delivery. It is also preferable to compare a plurality of jobs performed at a plurality of receiving apparatuses in the case of a broadcast transmission in which data is transmitted to the plurality of receiving apparatuses.

On the other hand, the above prior art merely disclose that a personal computer accesses to a predetermined communication apparatus and displays only information regarding the communication apparatus. However, the prior art has to access to each of a plurality of communication apparatuses in order to obtain the information regarding the jobs both form the transmitting apparatus and from the receiving apparatus. According to the prior art, extremely many procedures have to be performed for obtaining the information regarding the jobs when there are many communication apparatuses to be managed by the personal computer.
PATENT ABSTRACTS OF JAPAN vol. 2002, no. 05, 3 May 2002 (2002-05-03), JP 2002007095 A discloses that a web server function is given to the image processor having a scanner, a printer, an e-mail function and a facsimile transmission reception function. The image processor generates a list on the situation of respective jobs and information on stored image data as a web page. The user of a remote computer via network can grasp information on a plurality of jobs performed in the image processor by using the web browser. However, this document only discloses a single image processor apparatus generating its own status list as a web page, but does not disclose a central server which can manage a plurality of connected communication apparatuses via the Internet and generate a complete list for the plurality of apparatuses so that the remote user can acknowledge the situations of all apparatuses.

### SUMMARY OF THE INVENTION

The present invention is provided to solve the above problem. A purpose of the present invention puts forth a server apparatus and a method for controlling the server apparatus that are configured to facilitate verification of the delivery status and analysis of the cause of the failed delivery.

In order to achieve the purpose of the invention, a server apparatus is connected to a plurality of communication apparatuses via the Internet, and is connected to a personal computer via the Internet. The server apparatus comprises a communicator configured to obtain, form the plurality of communication apparatuses, information regarding a job. The server apparatus also comprises a memory configured to store the obtained information regarding the job. The job includes a transmitting job and a receiving job. The transmitting job is linked with the corresponding receiving job by a predetermined identification information. The server apparatus further comprises a controller configured to receive, from the personal computer, a request for the information regarding the job. The request designates a transmitting communication apparatus. The controller searches the memory for the transmitting job of the transmitting communication apparatus and the corresponding receiving job, based on the predetermined identification information, and transmits, to the personal computer, the transmitting job and the corresponding receiving job.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Figure 1 is a block diagram of a document data delivery verification support system as described by the invention.
Figure 2 is a table illustrating the structure of the job data stored in the server shown in Figure 1.
Figure 3 is a table illustrating the structure of the device data stored in the server shown in Figure 1.
Figure 4 illustrates a web browser screen on the web browser of the client computer shown in Figure 1.
Figure 5 illustrates a web browser screen of the client computer shown in Figure 1.
Figure 6 illustrates a web browser screen of the client computer shown in Figure 1.
Figure 7 illustrates a web browser screen of the client computer shown in Figure 1.
Figure 8 illustrates a web browser screen of the client computer shown in Figure 1.
Figure 9 is a flow chart describing the main operations when data is obtained by the server shown in Figure 1.
Figure 10 is a flow chart describing the main operation when data is provided by the server shown in Figure 1.

### DETAILED DESCRIPTION OF PREFERRED EMBODIMENTS

An embodiment of the present invention is explained in the following, in reference to the above-described drawings.

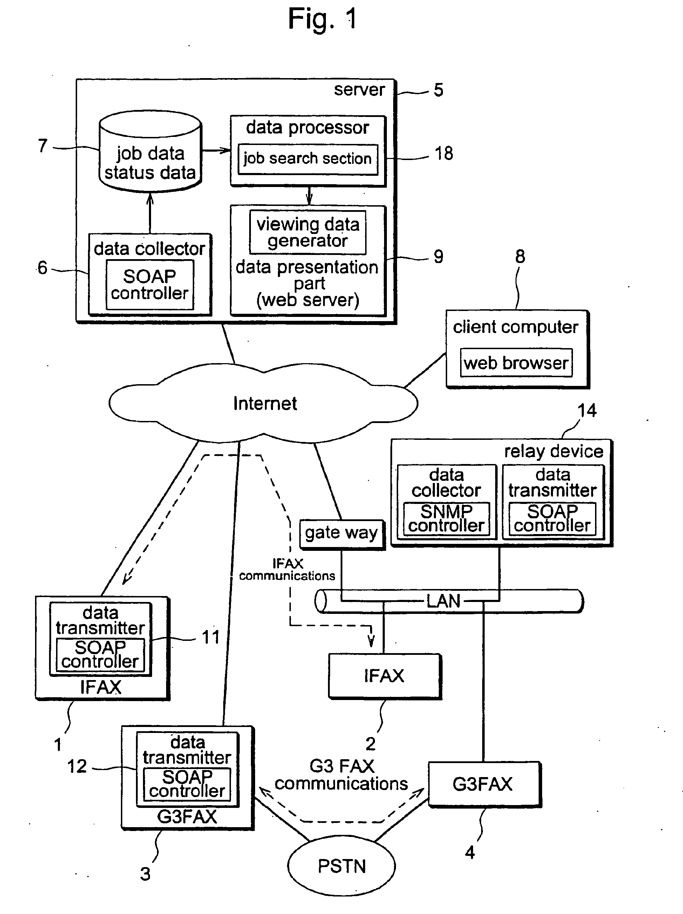

Figure 1 is a block diagram of a document delivery verification support system as described by the invention. Facsimile apparatuses (communication apparatuses) 1 and 2 are Internet facsimile apparatuses that transmit and receive document data in the form of image data transmitted over the Internet by electronic mails. Facsimile apparatuses (communication apparatuses) 3 and 4 are G3 facsimile apparatuses that transmit and image data in the form of document data transmitted via a public switched telephone network (PSTN).

Server apparatus (communication job data presentation device) 5 includes data collector 6, as a communicator, that obtains, through the Internet, a transmitting job data and a receiving job data from facsimile apparatuses 1 through 4, data memory 7 that stores data obtained from data collector 6, and web server 9 that transmits the job data from data memory 7 to client computers (viewing devices) 8.

Facsimile apparatuses 1 and 3 are equipped with data transmitters 11 and 12 respectively which transmit data, which is related to jobs executed by facsimile 1 and 3, through the Internet to server apparatus 5. Data transmitters 11 and 12 are each equipped with a SOAP controller that transmits job data to server apparatus 5 according to a SOAP protocol (Simple Object Access Protocol). This job data transmission is conducted whenever a job is executed.

Facsimile apparatuses 2 and 4, which are not able to communicate directly with server apparatus 5 through the Internet, are connected to relay apparatus 14 through a local area network (LAN). Relay apparatus 14 is equipped with data collector 15 which obtains job data relating to the transmitting operations and the receiving operations of facsimile apparatuses 2 and 4 over the LAN, and data transmitter 16 that transmits the aforesaid job data to server apparatus 5 over the Internet.

Data collector 15 of relay apparatus 14 includes an SNMP controller that obtains job data from facsimiles apparatuses 2 and 4, and data transmitter 16 includes a SOAP controller that transmits job data to server apparatus 5 according to the SOAP protocol. The process through which job data is obtained is based on the Management Information Base (MIB) of facsimiles 2 and 4, and a job data transmission is executed whenever job data is obtained from facsimiles 2 and 4. Moreover, relay apparatus 14 may be provided to install a program, which executes a required process, in a personal computer. Data collector 15 of relay apparatus 14 obtains the job data from facsimile apparatus 2 and 4 according to a SNMP protocol (Simple Network Management Protocol), and data transmitter 16 of relay apparatus 14 transmits the job data to server apparatus 5 according to the SOAP protocol.

Data collector 6 of server apparatus 5 includes a SOAP controller in order to obtain job data from facsimile apparatuses 1 and 3 and from relay apparatus 14, according to the SOAP protocol. Server apparatus 5 can be normally connected to facsimile apparatuses 1 and 3 and to relay apparatus 14. Whenever facsimile apparatuses 1 or 3 execute a transmission or receive a job, or whenever job data is obtained from facsimile apparatuses 2 or 4 through relay apparatus 14, the job data is transmitted to server apparatus 5.

Web server (information provider) 9 of server apparatus 5 incorporates a function that, in response to a view request from client computers, formats web page data (viewing data), which has been assembled from the relevant job data, into HTML format, and then transmits the web page to client computers. Client computer 8 then uses a web browser to display the web page which contains the job data. Moreover, the viewing data, created by server apparatus 5, can also be structured to be viewed through a special viewing application.

Server apparatus 5 also includes data processor 18 which generates data, based on the various data stored in data memory 7. The generated data is required by web browser 9 to create the web page. Data processor 18 includes a job search section that searches for corresponding transmitted and receiving jobs that relate to the delivered document. Web server 9 generates web page data which assembles job data regarding corresponding transmitted and receiving jobs, and then transmits that web page to client computer 8.

Data processor 18 searches jobs. The job search is executed by determining the relationship between the transmitted and receiving jobs, based on a designated message ID (discriminator data). The message ID is sent, along with document data, from the transmitting facsimile apparatus to the receiving facsimile apparatus, and then data collector 6 of server apparatus 5 obtains the message ID, as job data, form the transmitting facsimile apparatus and form the receiving facsimile apparatus.

For example, in the case of Internet facsimile apparatuses 1 and 2, the message ID is contained in a header of an e-mail. In the case of G3 facsimile apparatuses 3 and 4, the message ID is exchanged by a non-standard function setting signal (NSS) during negotiations between G3 facsimile apparatuses 3 and 4. Furthermore, in the case of G3 facsimile apparatuses 3 and 4, the relationship between the transmitting apparatus and the receiving apparatus can be determined, based on the transmission time and the reception time in close proximity, and based on the same address (dialed number) and the same communication type utilized between the transmitting apparatus and the receiving apparatus.

When an operator specifies a transmitting job to verify delivery status, the operator specifies the facsimile apparatus that executes the transmitting job and specifies the time during which the transmitted job is executed. Thereby, data processor 18 finds the transmitting job, according to search conditions specified by the operator.

In the same manner as it obtains job data, data collector 6 in server apparatus 5 directly obtains status data showing the current status of facsimile apparatuses 1 and 3, and obtains status data from facsimile apparatuses 2 and 4 through relay apparatus 14. After that, the data is stored in data memory 7. Facsimile apparatuses 1 and 3 periodically send self-status data to server apparatus 5. Relay apparatus 14 periodically sends status data obtained from facsimile apparatuses 2 and 4 to server apparatus 5. The status data can indicate various conditions such as idle (normal status), power off, off-line, paper jam, door open etc.

Furthermore, in cases where data processor 18 in server apparatus 5 cannot find the receiving job which is the object of the search, an operation is executed to specify the receiving facsimile apparatus that corresponds to the transmitting job. This operation is based on data from the transmitting facsimile apparatus. The data comprises the transmission destination address, and data pertaining to the transmitting apparatus itself. As a result, status data of the receiving facsimile apparatus is placed in the web page instead of receiving job data, and is sent to the client computer.

In the case where the specified transmitting job indicates a multicasting transmission in which the same information being transmitted to a plurality of facsimile apparatus destinations, job data, relating to the receiving job data executed by each of the plurality of receiving facsimile apparatuses, is taken from data memory 7 by data processor 18 of server apparatus 5. Then data processor 18 compiles and processes the data. The transmitting job data and the plurality of receiving job data corresponding to the transmitting job data are assembled into a web page, and are transmitted to client computer 8.

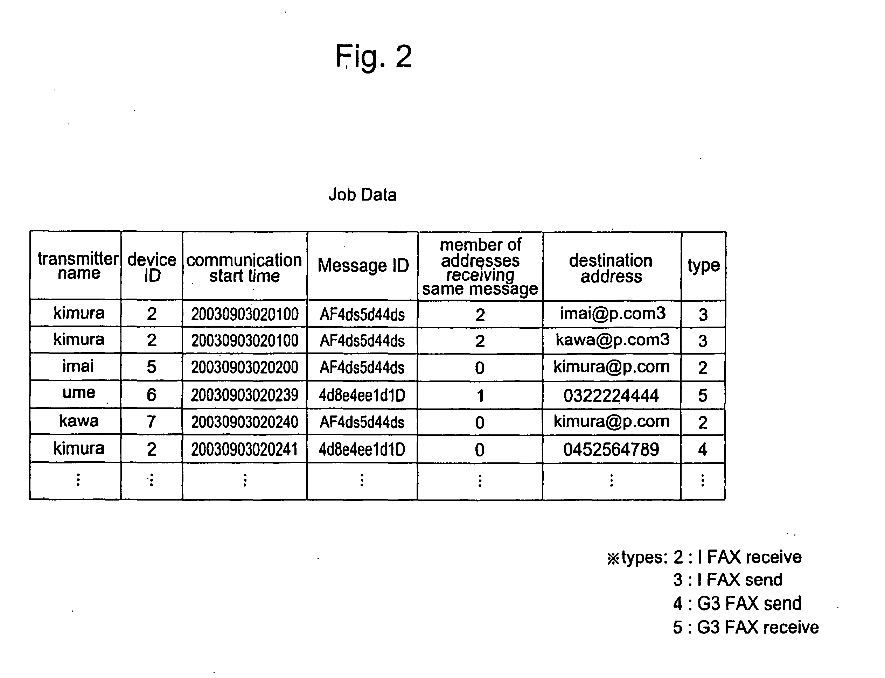

Figure 2 illustrates the data structure for job data stored in the server shown in Figure 1. The data stored in data memory 7 of server apparatus 5 includes the name of the sender, device ID, communications start time, message ID, number of recipients receiving the same message, destination address, and communication type for each transmission and reception job. An e-mail address is used when using an Internet facsimile apparatus, and a PSTN dial-up number is used when the destination is a G3 facsimile apparatus.

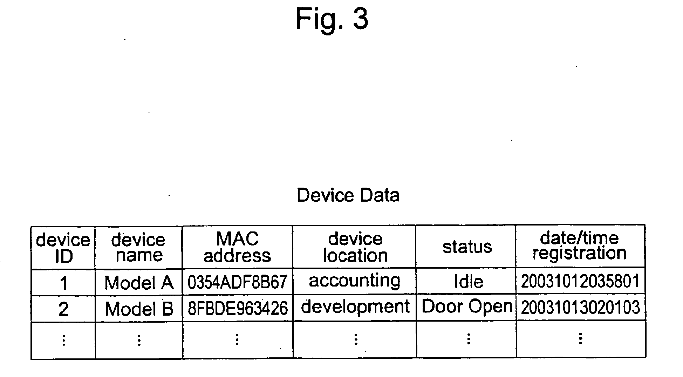

Figure 3 illustrates the data structure of the device data stored in the server shown in Figure 1. Memory 7 of server apparatus 5 stores the device ID, device name, MAC address, location, condition (status data), and registration time. This data is obtained from the facsimile apparatus and is set in client computer 8.

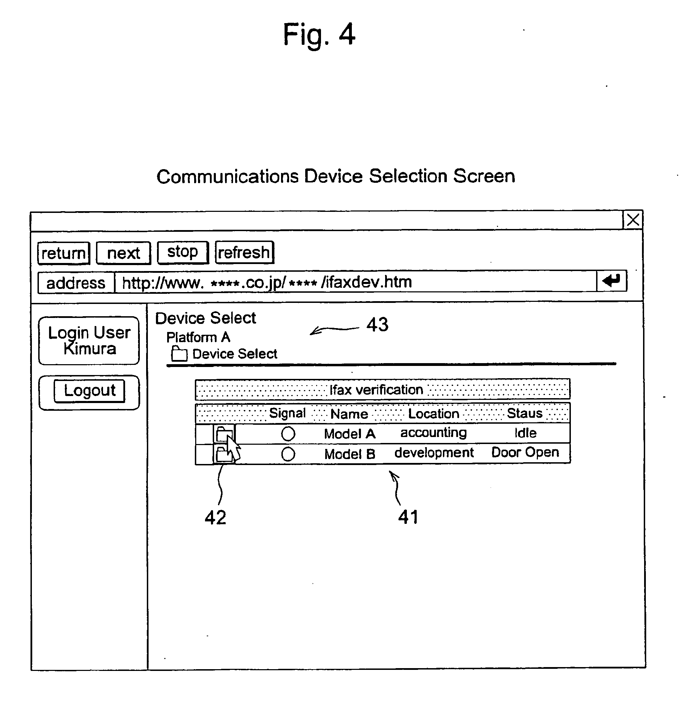

Figures 4 through 8 illustrate screen displays provided by the client computer web browser shown in Figure 1. These screens are accessed by the web browser of client computer 8 through server apparatus 5, and are displayed as web page data transmitted from server apparatus 5. The operator can use a pointing device or other like input device to select the screen for display.

Figure 4 illustrates the Communications Device Selection Screen which is used to specify the transmitting facsimile apparatus for which the delivery status is to be verified. Facsimile apparatus data is used in device data display column 41. Transmission device selector buttons 42, located to the left of device data display column 41, can be used to select the desired facsimile apparatus. Device data display column 41 displays the presence or absence of a signal from the facsimile apparatus (Signal), the name of the facsimile apparatus (Name), the location (Location), and the condition (status) based on the device data shown in Figure 3.

"Platform," which is displayed in message column 43 at the top of the screen, shows the connection system through which the facsimile apparatus is connected to server apparatus 5. "Platform A" indicates the connection system through which facsimile apparatuses 1 and 3 are connected directly to server apparatus 5, and "Platform B" indicates the connection system through which facsimile apparatuses 2 and 4 are connected to server apparatus 5 through relay apparatus 14. Facsimile apparatuses whose platforms have been specified in advance are listed in device data display column 41.

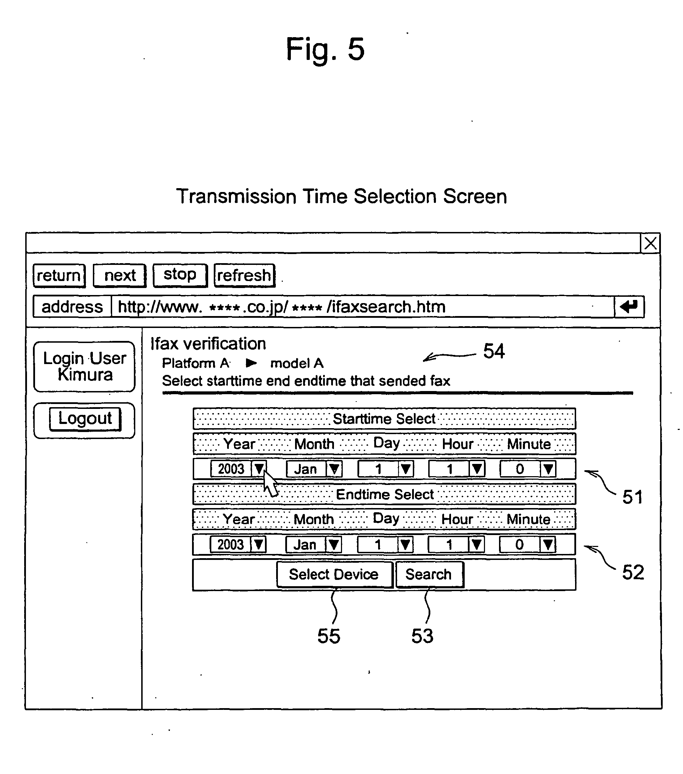

The Transmission Time Selection Screen shown in Figure 5 is used to narrow down the time period for transmitting jobs executed by transmission devices selected in the Communications Device Selection Screen shown in Figure 4. Start Time Select column 51 is used to select the date and time from where the job search will start, and End Time Select column 52 is used to select the date and time at which the job search will end. Touching the "Search" button will execute the processing operation for the transmitting job search.

Message column 54 at the top of the screen shows the platform (Platform A) to which the device belongs, and the name of the model of the device (Model A). Moreover, Select Device button 55 can be used to return to the Transmission Device Selection Screen shown in Figure 4.

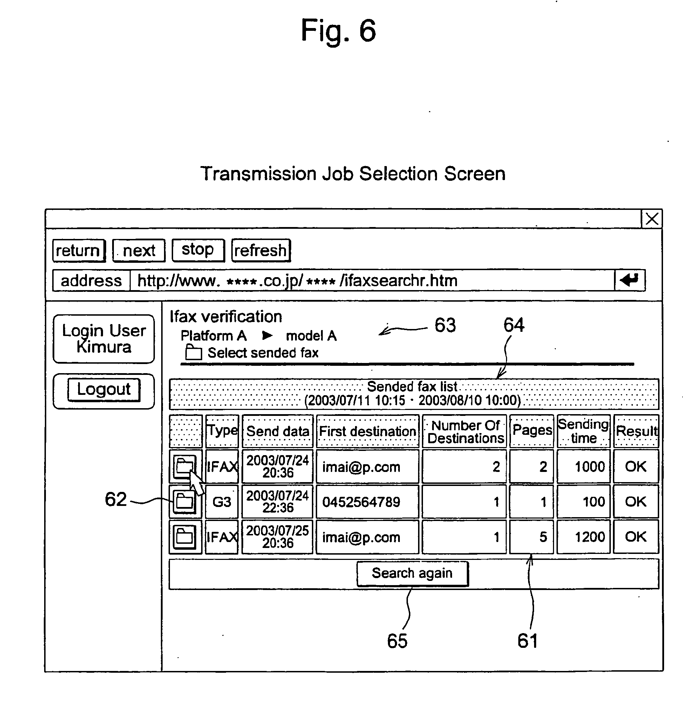

The Transmitting job Selection Screen shown in Figure 6 provides a list of transmitting jobs corresponding to the transmission devices selected in the Transmission Device Selection Screen shown in Figure 4, and the transmission times selected in the Transmission Time Selection Screen shown in Figure 5. The desired transmitting job can be selected from this list. Relevant transmitting jobs are displayed in transmitting job data column 61, and the desired transmitting job can be selected through the operation of transmitting job select button 62 located to the left of transmitting job data column 61.

Transmitting job data column 61 displays data pertaining to communications type (Type), date of transmission (Send Date), first destination (First Destination), a number of destinations (Number of Destination), a number of transmitted pages (Pages), time of transmission (Sending Time), and transmission result (Result). The operator refers to the transmitting job data in this list, and selects the transmitting job for which the delivery status will be verified.

Message column 63, which is located at the top of the screen, shows the platform (Platform A) to which the device belongs, and the name of the device model (Model A). The time period selected in the Transmission Time Selection Screen of Figure 5 is shown in title column 64. Activating the Search Again button 65 will recall the Transmission Time Selection Screen shown in Figure 5.

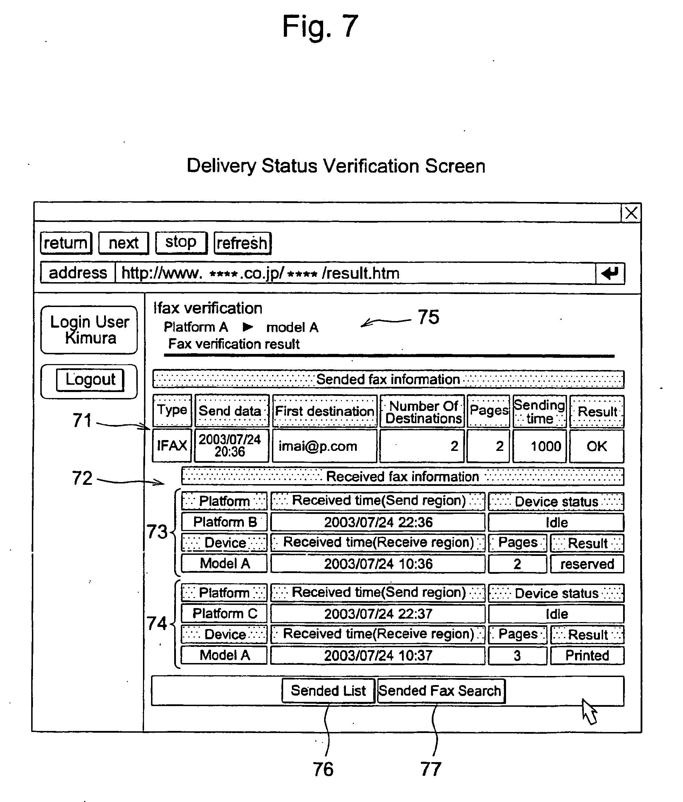

The Delivery Status Verification Screen shown in Figure 7 provides a list of receiving jobs corresponding to the transmitting jobs that were selected from the Transmitting job Selection Screen shown in Figure 6. An operation can be conducted from this screen to verify the delivery status of document data and to analyze the cause of a delivery failure. Transmission data display column (Sended Fax Information) 71 shows the job data for the selected transmitting job, and reception data display column (Received Fax Information) 72 shows the job data and the status data, corresponding to receiving job.

In this example, multiple communications devices have been selected as transmission destinations to which the same transmission has been sent. In this case, Received Fax Information column 72 includes destination data display columns 73 and 74 that provide data pertaining to the receiving job for each destination as well as corresponding job status data.

Transmission data display column (Sended Fax Information column) 71 displays various types of transmitting job data in the same manner as the Transmitting job Selection Screen shown in Figure 6. Receiving job data, in the form of platform name (Platform), device type (Device), a received time in a transmitting location (Received Time (Send Region)), a received time in a received location (Received Time (Receive Region)), a number of received pages (Pages), result of reception (Result), and status data (Device Status) is displayed in Destination Data Display Columns 73 and 74 in Received Fax Information columns 72, as well as data pertaining to the status of the device (Device Status).

Message column 75, located at the top of the screen, shows the platform (Platform A) to which the device belongs, and the name of the type of device (Model). Also, Sended List button 76 is used to return to the Transmitting job Selection Screen shown in Figure 6, and Sended Fax Search button 77 to return to the Transmission Time Selection Screen shown in Figure 5.

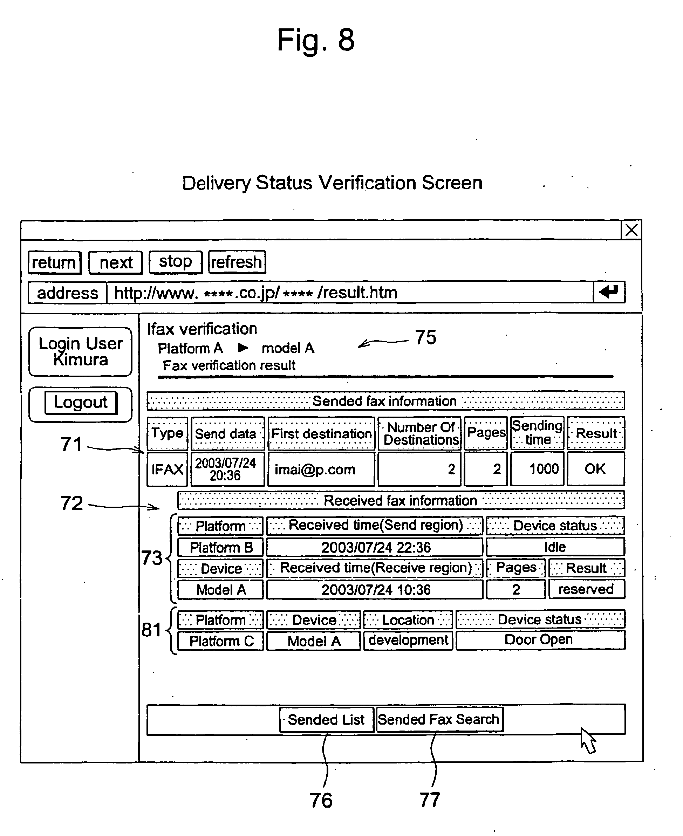

The Delivery Status Verification Screen shown in Figure 8 illustrates one example where a job search has failed to find the receiving job corresponding to the transmitting job for which a delivery status verification was requested. Destination Data Display column 81 (in Received Fax Information column 72) displays the status data instead of the receiving job data for the receiving facsimile apparatus.

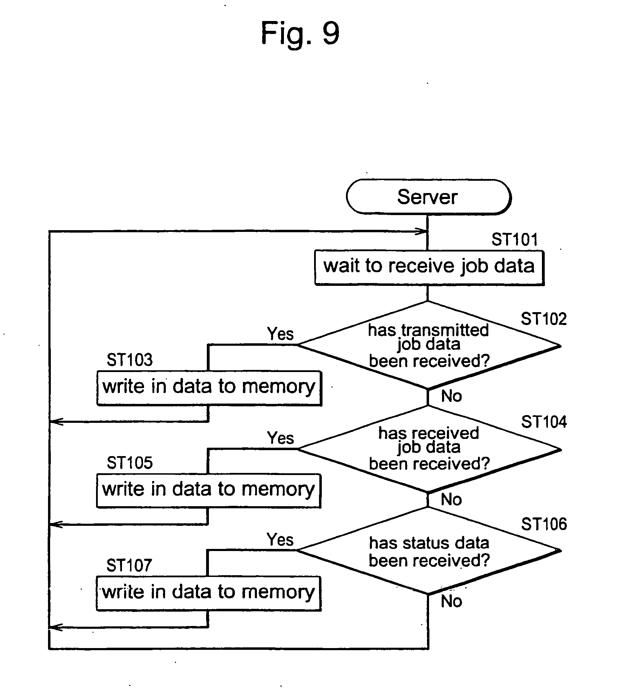

Figure 9 is a flow chart illustrating the main operations executed when data is obtained by the server shown in Figure 1. Normally, server apparatus 5 is in a standby condition waiting for job and status data from a facsimile apparatus (step 101). When transmitting job data from a facsimile apparatus is received (step 102), the received transmitting job data is written into data memory 7 (step 103). When job data is received again (step 104), the data is written into data memory 7 (step 105). When job data is received again (step 106), the data is written into data memory 7 (step 107).

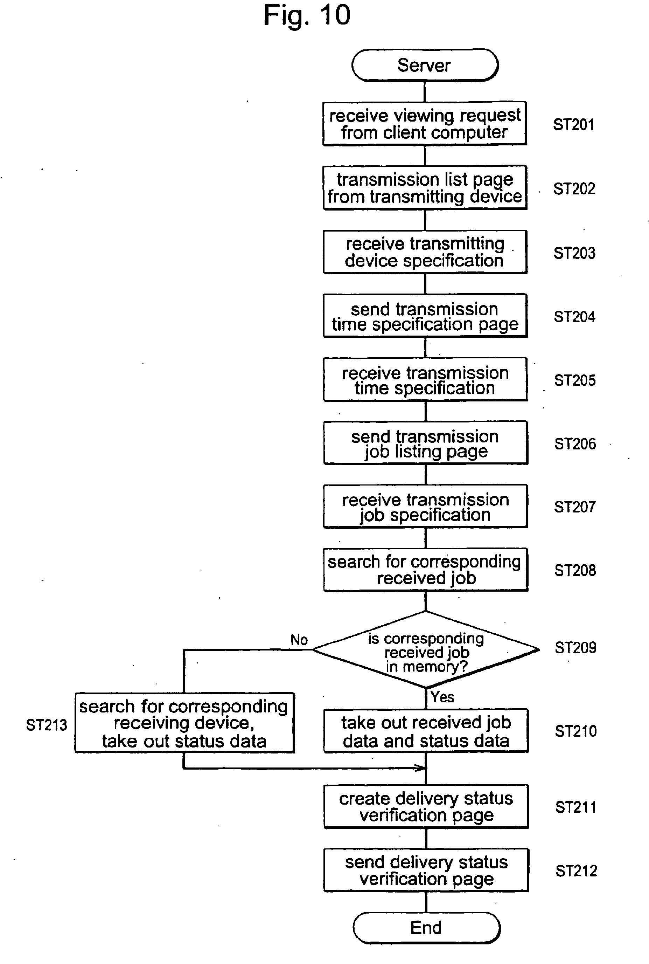

Figure 10 is a flow chart illustrating the main operations executed when data is provided by the server shown in Figure 1. First, a view request is received by server apparatus 5 from client computer 8 through a web browser (step 201). Web page data is sent to client computer 8 in order to display the Transmission Device Selection Screen shown in Figure 4 on client computer 8 (step 202). The operator then operates client computer 8 to select the relevant communications devices.

The operator of client computer 8 then selects the communications device which is sent to server apparatus 5 (step 203). Web page data is then sent to client computer 8 so that client computer 8 may display, in this case, the Transmission Time Selection Screen shown in Figure 5 (step 204). The operator of client computer 8 then selects the transmission time period.

The transmission time period selected by the operator of client computer 8 is then sent to server apparatus 5 (step 205). Data processor 18 executes a search operation for job data within the time period specified for the selected communications device. Web page data resulting from the search is sent to client computer 8 (step 206) so that client computer 8 can display the Transmitting job Selection Screen shown in Figure 6, and thus allow the operator of client computer 8 to select the desired transmitting job.

Next, server apparatus 5 receives the transmitting job which is selected by the operator of client computer 8 (step 209), and data processor 18 executes a search operation for the receiving job corresponding to the selected transmitting job, from the data stored in data memory 7 (step 208).

A determination is made whether the receiving job corresponding to the specified transmitting job exists (step 209). In a case where the receiving job exists, data processor 18 removes the corresponding receiving job data and status data of the receiving apparatus from data memory 7 (step 210), compiles information the receiving apparatus and information regarding the transmitting apparatus, and creates web page data so that the Delivery Status Verification Screen shown in Figure 7 can be displayed by client computer 8 (step 211). The web page data is sent to client computer 8 (step 212). After that, computer 8 can display the Delivery Status Verification Screen.

On the other hand, in a case where the receiving job corresponding to the transmitting job cannot be found, data processor 18 searches for the receiving apparatus corresponding to the transmitting job, based on destination and information regarding the transmitting apparatus, reads out status data of the receiving apparatus from data memory 7 (step 213), and continues with the above step for generating web page data (step 211). In this case, the Transmission Status Verification Screen, shown in Figure 8 as an example, is displayed on client computer 8.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. A server apparatus (5) connected to a plurality of communication apparatuses (1-4) via the Internet, the plurality of communication apparatuses communicating with each other, and connected to a terminal apparatus (8) via the Internet, the server apparatus comprising:
a communicator (6) configured to obtain, from the plurality of communication apparatuses, information regarding a job, the job being the delivery of data from one to the other and being performed between at least two of the plurality of communication apparatuses;
a memory (7) configured to store the obtained information regarding the job, the job including a transmitting job and a receiving job, the transmitting job being linked with the corresponding receiving job by a predetermined identification information; and
a controller (18) configured to:
receive, from the terminal apparatus, a request for the information regarding the job, the request designating a transmitting communication apparatus;
search the memory for the transmitting job of the transmitting communication apparatus and the corresponding receiving job, based on the predetermined identification information; and
transmit, to the terminal apparatus, information regarding the transmitting job and the corresponding receiving job.

2. The server apparatus according to claim 1, wherein the transmitting job is obtained from a communication apparatus, the transmitting job indicating that the communication apparatus transmitted data to another communication apparatus.

3. The server apparatus according to claim 1 or 2, wherein the information regarding the transmitting job comprises a communication type, a send date, the number of destinations, a number of pages, a sending time, and a communication result.

4. The server apparatus according to any of claims 1-3, wherein the receiving job is obtained from a communication apparatus, the receiving job indicating that the communication apparatus received data form another communication apparatus.

5. The server apparatus according to any of claims 1-4, wherein the information regarding the receiving job comprises a device type, a received time in a transmitting region, a received time in a receiving region, a number of pages, and a communication result.

6. The server apparatus according to any of claims 1 - 5, wherein the controller obtains, from the plurality of communication apparatuses, status information, the status information indicating current condition of each of the plurality of communication apparatuses, and, when the corresponding receiving job is not found by the search of the memory, the controller transmits the status information to the terminal apparatus.

7. The server apparatus according to claim 6, wherein the current condition comprises information regarding whether the communication apparatus works normally, whether a power of the communication apparatus is OFF, whether the communication apparatus is offline, whether a paper jam has occurred in the communication apparatus, and whether a front cover of the communication apparatus is open.

8. The server apparatus according to any of claims 1 - 7, wherein, when the controller receives, from the terminal apparatus, the request for the information regarding the job, the controller generates a Web page data in response to the request, the Web page data including the information regarding the job stored in the memory, and transmits the Web page data to the terminal apparatus in order to transmit the transmitting job and the corresponding receiving job to the terminal apparatus.

9. The server apparatus according to any of claims 1 - 8, wherein one of the plurality of communication apparatuses comprises a facsimile apparatus, the facsimile apparatus transmitting and receiving image data via PSTN.

10. The server apparatus according to any of claims 1-9, wherein one of the plurality of communication apparatuses comprises an Internet facsimile apparatus, the Internet facsimile apparatus transmitting image data to a receiving communication apparatus via the Internet by using an e-mail to which the image data is attached.

11. The server apparatus according to any of claims 1-10, wherein, when data is transmitted from one communication apparatus to another communication apparatus, the predetermined identification information is transmitted from the one communication apparatus to the another communication apparatus.

12. The server apparatus according to any of claims 1-11, wherein the one communication apparatus and the another communication apparatus are facsimile apparatuses, the facsimile apparatuses transmitting and receiving image data via PSTN, and the predetermined identification is contained in a NSS control signal during a negotiation of a facsimile communication procedure.

13. The server apparatus according to any of claims 1-11, wherein the one communication apparatus is an Internet facsimile apparatus, the Internet facsimile apparatus transmitting image data to a receiving communication apparatus via the Internet by using an e-mail to which the image data is attached, and the predetermined identification information is contained in a header of the e-mail.

14. The server-apparatus according to any of claims 1 - 13, wherein the terminal apparatus comprises a personal computer.

15. The server apparatus according to any of claims 1-14, wherein in the plurality of communication apparatuses, a transmitting communication apparatus multicast data to a plurality of receiving communication apparatuses,
the job being performed between at least three of the plurality of communication apparatuses, being related to a multicasting transmission,
and including a multicast transmitting job and a plurality of receiving jobs corresponding to the multicast transmitting job, the multicast transmitting job being linked with the plurality of the corresponding receiving jobs by a predetermined identification information.

16. The server apparatus according to any of claims 1 - 15, wherein a relay apparatus (14) is further connected to the server apparatus (5), the relay apparatus comprises a communicator configured to obtain, from the plurality of communication apparatuses, the information regarding the job, wherein the communicator (6) of the server apparatus is configured to obtain, from the relay apparatus, the information regarding the job, and the memory (7) of the server apparatus is configured to store the obtained information regarding the job.

17. The server apparatus according to claim 16, wherein the relay apparatus obtains the information regarding the job from the plurality of the communication apparatuses according to a SNMP protocol, and transmits the information regarding the job to the server apparatus according to a SOAP protocol.

18. The server apparatus according to any of claims 1 - 17 further is connected to one facsimile apparatus (3) via the Internet, the facsimile apparatus being connected to another facsimile apparatus (4) via a PSTN, the transmitting job and the receiving job being performed between the one facsimile apparatus and the another facsimile apparatus, wherein the communicator obtains, from the one facsimile apparatus and the another facsimile apparatus, the information regarding the job via the Internet.

19. The server apparatus according to claim 18, wherein the communicator obtains, from the one facsimile apparatus and the another facsimile apparatus, the information regarding the job according to a SOAP protocol.

20. A method for controlling a server apparatus (5), the server apparatus being connected to a plurality of communication apparatuses (1-4) via the Internet, the plurality of communication apparatuses communicating with each other, and the sever apparatus being connected to a terminal apparatus (8) via the Internet, the sever apparatus having a memory (7), the method comprising:
obtaining by the server apparatus, from the plurality of communication apparatuses, information regarding a job, the job being the delivery of data from one to the other and being performed between at least two of the plurality of communication apparatuses;
storing in the memory of the server apparatus, the obtained information regarding the job, the job including a transmitting job and a receiving job, the transmitting job being linked with the corresponding receiving job by a predetermined identification information;
receiving, from the terminal apparatus to the server apparatus, a request for the information regarding the job, the request designating a transmitting communication apparatus;
searching the memory of the server apparatus for the transmitting job of the transmitting communication apparatus and the corresponding receiving job, based on the predetermined identification information; and
transmitting from the server apparatus, to the terminal apparatus, information regarding the transmitting job and the corresponding receiving job corresponding to the transmitting job.

## Patentansprüche

1. Serveworrichtung (5), die mit einer Mehrzahl von Kommunikationsvorrichtungen (1 - 4) über das Internet verbunden ist, wobei die Mehrzahl von Kommunikationsvorrichtungen miteinander kommunizieren und über das Internet mit einem Terminal bzw. Datenendgerät (8) verbunden sind, wobei die Servervorrichtung aufweist:
einen Kommunikator (6), der konfiguriert ist, so daß er von der Mehrzahl von Kommunikationsvorrichtungen Informationen betreffend einen Auftrag erhält, wobei der Auftrag die Auslieferung von Daten von einem zum anderen ist und zwischen zumindest zwei der Mehrzahl von Kommunikationsvorrichtungen ausgeführt wird,
einen Speicher (7), der konfiguriert ist, so daß er die erhaltene Information betreffend den Auftrag speichert, wobei der Auftrag einen Übertragungsauftrag und einen Empfangsauftrag beinhaltet, wobei der Übertragungsauftrag mit dem entsprechenden Empfangsauftrag durch eine vorbestimmte Identifikationsinformation verknüpft ist und
einen Controller (18), der konfiguriert ist, um:
von dem Datenendgerät eine Anfrage nach Information betreffend den Auftrag zu empfangen, wobei die Anfrage die übertragende Kommunikationsvorrichtung bezeichnet,
das Speichern nach dem Übertragungsauftrag der übertragenden Kommunikationsvorrichtung und dem entsprechenden Empfangsauftrag, basierend auf der vorbestimmten Identifikationsinformation zu durchsuchen, und
Information betreffend den Übertragungsauftrag und den entsprechenden Empfangsauftrag zum Datenendgerät zu übertragen.

2. Servervorrichtung nach Anspruch 1, bei der der Übertragungsauftrag von einer Kommunikationsvorrichtung erhalten wird, wobei der Übertragungsauftrag anzeigt, daß die Kommunikationsvorrichtung Daten zu einer anderen Kommunikationsvorrichtung übertragen hat.

3. Servervorrichtung nach Anspruch 1 oder 2, bei der die Information betreffend den Übertragungsauftrag einen Kommunikationstyp, ein Sendedatum, eine Anzahl von Bestimmungen, eine Anzahl von Seiten, eine Sendezeit und ein Kommunikationsergebnis aufweist.

4. Servervorrichtung nach einem der Ansprüche 1 bis 3, bei der der Empfangsauftrag von einer Kommunikationsvorrichtung erhalten wird, wobei der Empfangsauftrag anzeigt, daß die Kommunikationsvorrichtung Daten von einer anderen Kommunikationsvorrichtung empfangen hat.

5. Servervorrichtung nach einem der Ansprüche 1 bis 4, bei der die Information betreffend den Empfangsauftrag aufweist: einen Gerätetyp, eine Empfangszeit in einem Sendebereich, eine Empfangszeit in einem Empfangsbereich, eine Anzahl von Seiten und ein Kommunikationsergebnis.

6. Servervorrichtung nach einem der Ansprüche 1 bis 5, bei der der Controller aus einer Mehrzahl von Kommunikationsvorrichtungen eine Statusinformation erhält, wobei die Statusinformation den gegenwärtigen Zustand jeder der Mehrzahl von Kommunikationsvorrichtungen anzeigt, und, wenn der entsprechende Empfangsauftrag bei der Durchsuchung des Speichers nicht gefunden wird, der Controller die Statusinformation zu dem Datenendgerät übertragt.

7. Servervorrichtung nach Anspruch 6, bei der der gegenwärtige Zustand Information aufweist betreffend, ob die Kommunikationsvorrichtung normal arbeitet, ob die Energie der Kommunikationsvorrichtung ausgeschaltet ist, ob die Kommunikationsvorrichtung offline ist, ob ein Paperstau in der Kommunikationsvorrichtung aufgetreten ist und ob eine vordere Abdeckung der Kommunikationsvorrichtung geöffnet ist.

8. Servervorrichtung nach einem der Ansprüche 1 bis 7, bei der, wenn der Controller vom Datenendgerät die Anfrage nach der den Auftrag betreffenden Information erhält, der Controller Webseitendaten in Antwort auf die Anforderung erzeugt, wobei die Webseitendaten die Information betreffend den im Speicher abgelegten Auftrag beinhalten, und die Webseitendaten zu dem Datenendgerät sendet, um den Übermittlungsauftrag und den entsprechenden Empfangsauftrag zu dem Datenendgerät zu übertragen.

9. Servervorrichtung nach einem der Ansprüche 1 bis 8, bei der einer der Mehrzahl von Kommunikationsvorrichtungen eine Faxvorrichtung aufweist, wobei die Faxvorrichtung Bilddaten über PSTN überträgt und empfängt.

10. Servervorrichtung nach einem der Ansprüche 1 bis 9, bei der eine der Mehrzahl von Kommunikationsvorrichtungen eine Internet-Faxvorrichtung aufweist, wobei die Internet-Faxvorrichtung Bilddaten über das Internet an eine empfangene Kommunikationsvorrichtung überträgt durch Verwendung einer E-Mail, an der die Bilddaten angefügt sind.

11. Servervorrichtung nach einem der Ansprüche 1 bis 10, bei der, wenn Daten von einer Kommunikationsvorrichtung zu einer anderen Kommunikationsvorrichtung übertragen werden, die vorbestimmte Identifikationsinformation von der einen Kommunikationsvorrichtung zu der anderen Kommunikationsvorrichtung übertragen wird.

12. Servervorrichtung nach einem der Ansprüche 1 bis 11, bei der die eine Kommunikationsvorrichtung und die andere Kommunikationsvorrichtung Faxgeräte sind, wobei die Faxgeräte Bilddaten über PSTN senden und empfangen, und die vorbestimmte Identifikation in einem NSS-Steuersignal während einer Übertragung einer Faxkommunikationsprozedur enthalten ist.

13. Servervorrichtung nach einem der Ansprüche 1 bis 11, bei der die eine Kommunikationsvorrichtung eine Internet-Faxvorrichtung ist, wobei die Internet-Faxvorrichtung Bilddaten zu einer empfangenen Kommunikationseinrichtung über das Internet überträgt durch Verwenden einer E-Mail, an die die Bilddaten angefügt sind, und die vorbestimmte Identifikationsinformation in einer Kopfzeile der E-Mail enthalten ist.

14. Servervorrichtung nach einem der Ansprüche 1 bis 13, bei der das Datenendgerät einen PC aufweist.

15. Servervorrichtung nach einem der Ansprüche 1 bis 14, bei der in der Mehrzahl der Kommunikationsvorrichtungen eine Sendekommunikationsvorrichtung Daten gleichzeitig zu einer Mehrzahl von empfangenden Kommunikationseinrichtungen überträgt,
wobei der Auftrag von zumindest drei der Mehrzahl von Kommunikationsvorrichtungen durchgeführt wird, die mit einer Multicast-Übertragung verbunden sind, und
einen Multicast-Sendeauftrag und eine Mehrzahl von empfangenden Aufträgen entsprechend dem Multicast-Sendeauftrag beinhaltet sind, wobei der Multicast-Sendeauftrag mit der Mehrzahl der entsprechenden Empfangsaufträge durch eine vorbestimmte Identifikationsinformation verknüpft sind.

16. Servervorrichtung nach einem der Ansprüche 1 bis 15, bei der eine Relaisvorrichtung (14) weiterhin mit der Servereinrichtung (5) verbunden ist, wobei die Relaisvorrichtung einen Kommunikator aufweist, der konfiguriert ist, um von der Mehrzahl von Kommunikationseinrichtungen die Information betreffend den Auftrag zu erhalten, wobei der Kommunikator (6) der Servervorrichtung konfiguriert ist, um von der Relaisvorrichtung die Information betreffend den Auftrag zu erhalten und wobei der Speicher der Servervorrichtung konfiguriert ist, um die erhaltene Information betreffend den Auftrag zu speichern.

17. Servervorrichtung nach Anspruch 16, bei der die Relaisvorrichtung die Informationen betreffend den Auftrag von der Mehrzahl der Kommunikationsvorrichtungen gemäß einem SNMP-Protokoll erhält und die Information betreffend den Auftrag zu der Servervorrichtung entsprechend einem SOAP-Protokoll überträgt.

18. Servervorrichtung nach einem der Ansprüche 1 bis 17, die weiterhin mit einem Faxgerät (3) über das Internet verbunden ist, wobei das Faxgerät mit einem anderen Faxgerät (4) über ein PSTN verbunden ist, wobei der Sendeauftrag und der Empfangsauftrag zwischen dem einen Faxgerät und dem anderen Faxgerät durchgeführt werden, wobei der Kommunikator von dem einen Faxgerät und dem anderen Faxgerät die Information betreffend den Auftrag über das Internet erhält.

19. Servervorrichtung nach Anspruch 18, bei der der Kommunikator von dem einen Faxgerät und dem anderen Faxgerät die Information betreffend den Auftrag entsprechend einem SOAP-Protokoll empfängt.

20. Verfahren für das Steuern einer Servervorrichtung (5), wobei die Servervorrichtung mit einer Mehrzahl von Kommunikationsvorrichtungen (1 -4) über das Internet verbunden ist, wobei die Mehrzahl von Kommunikationsvorrichtungen miteinander kommunizieren und die Servervorrichtung mit einem Datenendgerät bzw. Terminal (8) über das Internet verbunden ist, wobei die Servervorrichtung einen Speicher (7) hat und das Verfahren aufweist:
Erhalten von Information betreffend einen Auftrag durch die Servervorrichtung von der Mehrzahl von Kommunikationsvorrichtungen, wobei der Auftrag das Ausliefern von Daten von einem zum anderen ist und zwischen zumindest zwei der Mehrzahl von Kommunikationsvorrichtungen durchgeführt wird,
Speichern der erhaltenen Information betreffend den Auftrag im Speicher der Servervorrichtung, wobei der Auftrag einen Sendeauftrag und einen Empfangsauftrag enthält, wobei der Sendeauftrag mit dem entsprechenden Empfangsauftrag durch eine vorbestimmte ldentifikationsinformation verbunden ist,
Empfangen einer Anforderung für die Information betreffend den Auftrag von dem Datenendgerät zu der Servervorrichtung, wobei die Anforderung eine Sendekommunikationsvorrichtung bestimmt,
Durchsuchen des Speichers der Servervorrichtung nach dem Sendeauftrag der Sendekommunikationsvorrichtung und dem entsprechenden Empfangsauftrag, basierend auf der vorbestimmten Identifikationsinformation und
Senden von Information betreffend den Sendeauftrag und den entsprechenden Empfangsauftrag entsprechend dem Sendeauftrag von der Servervorrichtung zum Datenendgerät..

## Revendications

1. Dispositif serveur (5) connecté à une pluralité de dispositifs de communication (1 à 4) par l'intermédiaire de l'Internet, la pluralité de dispositifs de communication communiquant l'un avec l'autre et étant reliés à un dispositif terminal (8) par l'intermédiaire de l'Internet, le dispositif serveur comprenant :
un communicateur (6), configuré pour acquérir, à partir de la pluralité de dispositifs de communication, une information concernant un travail, le travail consistant en la délivrance de données à partir de l'un vers l'autre et étant effectué entre au moins deux parmi la pluralité de dispositifs de communication ;
une mémoire (7) configurée pour stocker l'information acquise concernant le travail, le travail comprenant un travail de transmission et un travail de réception, le travail de transmission étant lié au travail de réception correspondant par une information d'identification prédéterminée ; et
un dispositif de commande (18) configuré pour :
recevoir, depuis le dispositif terminal, une demande pour l'information concernant le travail, la demande désignant un dispositif de communication de transmission ;
rechercher, dans la mémoire, le travail de transmission du dispositif de communication de transmission et le travail de réception correspondant, sur la base de l'information d'identification prédéterminée ; et
transmettre, au dispositif terminal, une information concernant le travail de transmission et le travail de réception correspondant.

2. Dispositif serveur selon la revendication 1, dans lequel le travail de transmission est acquis à partir d'un dispositif de communication, le travail de transmission indiquant que le dispositif de communication a transmis des données vers un autre dispositif de communication.

3. Dispositif serveur selon la revendication 1 ou 2, dans lequel l'information concernant le travail de transmission comprend un type de communication, une date d'envoi, le nombre de destinations, un nombre de pages, une heure d'envoi et un résultat de communication

4. Dispositif serveur selon l'une quelconque des revendications 1 à 3, dans lequel le travail de réception est acquis à partir d'un dispositif de communication, le travail de réception indiquant que le dispositif de communication a reçu des données à partir d'un autre dispositif de communication.

5. Dispositif serveur selon l'une quelconque des revendications 1 à 4, dans lequel l'information concernant le travail de réception comprend un type de dispositif, une heure reçue dans une région de transmission, une heure reçue dans une région de réception, un nombre de pages, et un résultat de communication.

6. Dispositif serveur selon l'une quelconque des revendications 1 à 5, dans lequel le dispositif de commande acquiert, à partir de la pluralité de dispositifs de communication, une information d'état, l'information d'état indiquant la condition courante de chacun parmi la pluralité de dispositifs de communication et, quand le travail de réception correspondant n'est pas trouvé par la recherche dans la mémoire, le dispositif de commande transmet l'information d'état au dispositif terminal.

7. Dispositif serveur selon la revendication 6, dans lequel la condition courante comprend une information concernant le fait que le dispositif de communication travaille normalement ou non, le fait qu'une alimentation du dispositif de communication est hors tension ou non, le fait que le dispositif de communication est hors ligne ou non, le fait qu'un bourrage papier s'est produit ou non dans le dispositif de communication et le fait qu'un capot frontal du dispositif de communication est ouvert ou non.

8. Dispositif serveur selon l'une quelconque des revendications 1 à 7, dans lequel, quand le dispositif de commande reçoit, à partir du dispositif terminal, la demande pour l'information concernant le travail, le dispositif de commande génère une donnée de pages Web en réponse à la demande, la donnée de page Web incluant l'information concernant le travail stocké dans la mémoire, et transmet la donnée de page Web au dispositif terminal de manière à transmettre le travail de transmission et le travail de réception correspondant au dispositif terminal.

9. Dispositif serveur selon l'une quelconque des revendications 1 à 8, dans lequel l'un parmi la pluralité de dispositifs de communication comprend un dispositif fax, le dispositif fax transmettant et recevant des données d'image par l'intermédiaire d'un PSTN.

10. Dispositif serveur selon l'une quelconque des revendications 1 à 9, dans lequel l'un parmi la pluralité de dispositifs de communication comprend un dispositif fax Internet, le dispositif fax Internet transmettant des données d'image à un dispositif de communication de réception par l'intermédiaire de l'Internet en utilisant un courrier électronique auquel les données d'image sont attachées.

11. Dispositif serveur selon l'une quelconque des revendications 1 à 10, dans lequel, quand des données sont transmises depuis un dispositif de communication vers un autre dispositif de communication, l'information d'identification prédéterminée est transmise depuis le premier dispositif de communication vers l'autre dispositif de communication.

12. Dispositif serveur selon l'une quelconque des revendications 1 à 11, dans lequel le premier dispositif de communication et l'autre dispositif de communication sont des dispositifs fax, les dispositifs fax transmettant et recevant des données d'image par l'intermédiaire d'un PSTN, et l'identification prédéterminée est contenue dans un signal de commande NSS durant une négociation d'une procédure de communication fax.

13. Dispositif serveur selon l'une quelconque des revendications 1 à 11, dans lequel le premier dispositif de communication est un dispositif fax Internet, le dispositif fax Internet transmettant des données d'image à un dispositif de communication de réception par l'intermédiaire de l'Internet en utilisant un courrier électronique auquel les données d'image sont attachées, et l'information d'identification prédéterminée est contenue dans un en-tête du courrier électronique.

14. Dispositif serveur selon l'une quelconque des revendications 1 à 13, dans lequel le dispositif terminal comprend un ordinateur personnel.

15. Dispositif serveur selon l'une quelconque des revendications 1 à 14, dans lequel, dans la pluralité de dispositifs de communication, un dispositif de communication de transmission effectue une multi-distribution de données vers une pluralité de dispositifs de communication de réception,
le travail étant réalisé entre au moins trois parmi la pluralité des dispositifs de communication, qui sont liés à une transmission en multi-distribution,
et comprenant un travail de transmission en multi-distribution et une pluralité de travaux de réception correspondants au travail de transmission en multi-distribution, le travail de transmission en multi-distribution étant lié à la pluralité des travaux de réception correspondants par une information d'identification prédéterminée.

16. Dispositif serveur selon l'une quelconque des revendications 1 à 15, dans lequel un dispositif relais (14) est de plus connecté au dispositif serveur (5), le dispositif relais comprend un communicateur configuré pour acquérir, à partir de la pluralité de dispositifs de communication, l'information concernant le travail, dans lequel le communicateur (6) du dispositif serveur est configuré pour acquérir, à partir du dispositif relais, l'information concernant le travail et la mémoire (7) du dispositif serveur est configurée pour stocker l'information acquise concernant le travail.

17. Dispositif serveur selon la revendication 16, dans lequel le dispositif relais acquiert l'information concernant le travail à partir de la pluralité des dispositifs de communication conformément à un protocole SNMP, et transmet l'information concernant le travail au dispositif serveur conformément à un protocole SOAP.

18. Dispositif serveur selon l'une quelconque des revendications 1 à 17, connecté, de plus, à un dispositif fax (3) par l'intermédiaire de l'Internet, le dispositif fax étant relié à un autre dispositif fax (4) par l'intermédiaire d'un PSTN, le travail de transmission et le travail de réception étant réalisés entre le premier dispositif fax et l'autre dispositif fax, dans lequel le communicateur acquiert, à partir du premier dispositif fax et de l'autre dispositif fax, l'information concernant le travail par l'intermédiaire de l'Internet.

19. Dispositif serveur selon la revendication 18, dans lequel le communicateur acquiert, à partir du premier dispositif fax et de l'autre dispositif fax, l'information concernant le travail conformément à un protocole SOAP.

20. Procédé destiné à commander un dispositif serveur (5), le dispositif serveur étant relié à une pluralité de dispositifs de communication (1 à 4) par l'intermédiaire de l'Internet, la pluralité de dispositifs de communication communiquant l'un avec l'autre et le dispositif serveur étant relié à un dispositif terminal (8) par l'intermédiaire de l'Internet, le dispositif serveur possédant une mémoire (7), le procédé comprenant :
l'acquisition par le dispositif serveur, à partir de la pluralité de dispositifs de communication, d'une information concernant un travail, le travail consistant en la délivrance de données depuis l'un vers l'autre et étant réalisé entre au moins deux parmi la pluralité de dispositifs de communication ;
le stockage, dans la mémoire du dispositif serveur, de l'information acquise concernant le travail, le travail comprenant un travail de transmission et un travail de réception, le travail de transmission étant lié au travail de réception correspondant par une information d'identification prédéterminée ;
la réception, à partir du dispositif terminal, vers le dispositif serveur, d'une demande pour l'information concernant le travail, la demande désignant un dispositif de communication de transmission ;
la recherche, dans la mémoire du dispositif serveur, du travail de transmission du dispositif de communication de transmission et du travail de réception correspondant sur la base de l'information d'identification prédéterminée ; et
la transmission à partir du dispositif serveur, vers le dispositif terminal, de l'information concernant le travail de transmission et le travail de réception correspondant correspondant au travail de transmission.
